# EUROPÄISCHE PATENTSCHRIFT

(11) **EP 0 875 441 B1**
(45) Veröffentlichungstag und Bekanntmachung des Hinweises auf die Patenterteilung: **02.01.2003**
(21) Anmeldenummer: 98107406.5
(22) Anmeldetag: 23.04.1998
(51) Int. Cl.: B62D 11/04

(54) **Fahrzeug in selbstangetriebener Bauweise**
Self-driving vehicle
Véhicule à mobilité autonome

(30) Priorität: 28.04.1997 US 848043
(43) Veröffentlichungstag der Anmeldung: 04.11.1998
(73) Patentinhaber: DEERE & COMPANY, Moline, Illinois 61265-8098 (US)
(72) Erfinder: Arfstorm, Jack Edward, Rubicon, WI 53078 (US); Braun, Stephen Alphonse, Horicon, WI 53032 (US); Williams, Llewellyn Everett, Hastings, MN 55033 (US)
(74) Vertreter: Magin, Ludwig Bernhard

(56) Entgegenhaltungen:
- GB-A- 2 303 829
- US-A- 5 146 735
- PATENT ABSTRACTS OF JAPAN vol. 009, no. 330 (M-442), 25. Dezember 1985 (1985-12-25) -& JP 60 161268 A (KUBOTA TEKKO KK), 22. August 1985 (1985-08-22)

## Beschreibung

Die Erfindung betrifft ein Fahrzeug in selbstangetriebener Bauweise, insbesondere Rasenmäher, mit einem linken und einem rechten Fortbewegungsmittel, die mittelbar oder unmittelbar von jeweils einem Motor angetrieben werden, mit linken und rechten Geschwindigkeitssteuerungen, zur Steuerung der Motoren und mit einem Steuerhebel, der in Verbindung mit den Geschwindigkeitssteuerungen steht, eine Vielzahl von Stellungen einnehmen kann, in denen die Geschwindigkeit jedes Motors begrenzt wird, und in einen das Verhältnis der Geschwindigkeiten bestimmenden Zustand bringbar ist.

Aus der US-A-4,920,733 ist es bekannt, mehrere hydrostatische Getriebe funktional zusammenzuschalten und den Hydraulikmotor jedes Getriebes an ein Rad zum Fortbewegen des Rasenmähers anzuschließen. Bei Rasenmähern dieses Typs ist es möglich, durch die Änderung der Ölzufuhrmenge und Ölzufuhrrichtung die Fahrtgeschwindigkeit und Richtung zu bestimmen. Durch die Verwendung von Steuerhebeln für jedes Rad kann das Fahrzeug gelenkt und sogar auf der Stelle gedreht werden.

Das Problem einer derartigen Vorrichtung besteht darin, daß aufgrund von unterschiedlichen Toleranzen bei der Fertigung der Pumpen und Motoren, sowie dem Wirkungsgrad in dem Gestänge und dem Antriebsstrang eine Geradeausfahrt schwer einzuhalten ist. Aber auch die Bodenbeschaffenheit und -lage können dazu führen, daß das Fahrzeug ständig seitlich abdriftet. Es ist daher für eine Bedienungsperson sehr anstrengend, über lange Zeit die Richtung des Fahrzeugs zu korrigieren.

Es ist darüber hinaus aus der gattungsgemässen US-A-5,488,818 bekannt, mit nur einem einzigen Hebel sowohl die Fahrtgeschwindigkeit als auch das Verhältnis der Antriebsgeschwindigkeiten beider Seiten zueinander einzustellen, indem dieser Hebel in zwei Richtungen verstellbar ist, von denen eine der Geschwindigkeit und eine der Richtung zugeordnet ist. Ein derart verschwenkbarer Hebel hat den Nachteil, daß bei der Verstellung in der einen Richtung insbesondere beim rauhen Betrieb zugleich auch eine ungewollte Verstellung in der anderen Richtung erfolgt.

Schließlich offenbart die US-A-5,518,079 ein System mit nur einem Hebel zur Einstellung der Geschwindigkeit des Rades auf jeder Seite und somit der Richtung. Die Stellung dieses Hebels wird jedoch beeinflußt, wenn die Geschwindigkeit eines Motors, z. B. beim Wenden geändert wird, so daß das Verhältnis der Antriebsgeschwindigkeit nach jedem Wendevorgang neu eingestellt werden muß.

Das der Erfindung zugrunde liegende Problem wird darin gesehen, daß bisher kein Fahrzeug bekannt geworden ist, bei dem die auf die jeweiligen Räder oder sonstigen Fortbewegungsmittel wirkenden Motore auf sichere, einfache und benutzerfreundliche Weise gesteuert werden können.

Dieses Problem wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise kann das Verhältnis der Antriebsgeschwindigkeiten der beidseitigen Fortbewegungsmittel eingestellt werden, was es ermöglicht, einen seitlichen Zug aufgrund von unterschiedlichen Fördermengen, Hangneigung, Bodenhaftung und dergl. auszugleichen. Diese Einstellung wirkt sich jedoch nicht auf die absolute Geschwindigkeit aus, da diese über die Geschwindigkeitssteuerungen eingestellt werden. Der Steuerhebel gibt lediglich die Grenzen der jeweiligen Geschwindigkeiten an, die diese annehmen, sofern sie nicht von den Geschwindigkeitssteuerungen überlagert werden.

Eine einfache Möglichkeit, die Relation zwischen den Geschwindigkeiten zu ändern, besteht darin, daß mechanische Stellmittel zwischen den jeweiligen Führungen betätigt werden. Mit kraftschlüssigen Stellmitteln kann die Einhaltung einer bestimmten Lage oder eines Zustands immer angestrebt werden, während mit formschlüssigen Stellmitteln eine sichere und unmittelbare Verstellung durchgeführt werden kann.

Die Verwendung einfacher Bauelemente wie Hebel und Gestänge sorgt für geringe Herstellungskosten, einfache Montage und Robustheit.

Damit die Gestänge stets und in jeder räumlichen Beziehung sicher geführt werden, sind die Ausnehmungen, in denen die Gestänge aufgenommen werden, umrandet. D. h., die Ausnehmungen können als Schlitz, als Loch oder dergleichen ausgebildet werden und das Gestänge z. B. in einer Öse, einem Zapfen, einem Schenkel oder dergl. aufnehmen.

Eine präzise Einstellung der Geschwindigkeitsrelation ist erreichbar, wenn das formschlüssige Stellmittel ein Gewinde aufweist, über das eine Gewindestange mittels eines Einstellrads verstellt werden kann. Je nach der Steigung des Gewindes kann die Einstellung mehr oder weniger fein erfolgen.

Einen Anschlag an den Führungen anzubringen, erbringt die Möglichkeit, den Bereich, innerhalb dessen die Geschwindigkeit aufgrund der Stellung des Steuerhebels verstellt werden kann, einzuengen, bzw. die Endgeschwindigkeit auf einen bestimmten Wert festzulegen, der immer wieder angefahren werden kann, oder der das Fahrzeug z. B. beim Transport feststellt.

Wenngleich die Erfindung auch mittels Verbrennungs- oder Elektromotoren verwirklicht werden kann, die die jeweiligen Fortbewegungsmittel antreiben, so ist die Verwendung von Hydraulikmotoren, die von Hydraulikpumpen angetrieben werden, wobei erstere ein konstantes und letztere ein variables Betriebsvolumen aufweisen, deshalb von großem Vorteil, weil diese Technik leicht umgesetzt werden kann, in der Praxis bewährt ist und mit geringen Baugrößen auskommt.

Die Verwendung wenigstens eines Schalthebels und eines Schalters, die z. B. den Motor abschalten, wenn sie nicht betätigt werden, stellt ein ausgezeichnetes Sicherheitsmerkmal dar, das dazu beiträgt, daß sich eine Bedienungsperson nicht in den Gefahrenbereich einer von ihr verlassenen Maschine begibt. Folglich kann diese Bedienungsperson z. B. nicht in rotierende Messer eines Rasenmähers greifen.

Weitere Sicherheit wird dadurch erreicht, daß das Fahrzeug automatisch auf dem Boden festgestellt wird, wenn die Fortbewegung unterbrochen ist, indem nämlich abhängig von der Stellung des Steuerhebels Bremsen angelegt werden.

Wenn der Steuerhebel, das Steuerrohr, das Einstellmittel und die Führung, die dem Fortbewegungsmittel einer Seite zugeordnet sind, als eine starre Einheit ausgebildet und somit als ein einziger Teil verstellt werden, ist mit diesem Teil zum einen eine genaue Steuerung der Endgeschwindigkeit eines Fortbewegungsmittels möglich und zum anderen bildet dieser Teil eine Stütze, an dem sich die gleichen Komponenten für die Steuerung des anderen Fortbewegungsmittels abstützen können und denen gegenüber sie einstellbar sind.

Die mit den Einstellmitteln verbundenen Führungen, die schließlich die Endgeschwindigkeit der Fortbewegungsmittel bestimmen, werden spielfrei in die von dem Anschlag der Gestänge an den Führungen bestimmte Lage gebracht, wenn das kraftschlüssige Einstellmittel als eine Feder ausgebildet ist.

Eine auch gegen äußere Einflüsse sichere Unterbringung des formschlüssigen Steuermittels, z. B. der Gewindestange, wird erreicht, wenn diese innerhalb des Steuerhebels aufgenommen und mittels des Einstellrads verstellbar ist.

Mit Reibmitteln zwischen dem Steuerhebel und einem Träger kann erreicht werden, daß sich der Steuerhebel bei Erschütterungen nicht verstellt, während seine beabsichtigte Bewegungsmöglichkeit nicht geschmälert wird.

In der Zeichnung ist ein nachfolgend näher beschriebenes Ausführungsbeispiel der Erfindung dargestellt. Es zeigt:
- Fig. 1: einen erfindungsgemäßen selbstangetriebenen, geführten Rasenmäher in perspektivischer Darstellung,
- Fig. 2: einen Steuermechanismus für einen Motor eines Rads in perspektivischer Darstellung,
- Fig. 3: eine Anordnung von Einstellmitteln aus Figur 2 in vergrößerter Darstellung,
- Fig. 4: die linke Seite des Steuermechanismus in vergrößerter Darstellung, wobei sich ein Steuerhebel in seiner Höchstgeschwindigkeitsstellung befindet,
- Fig. 5: die linke Seite des Steuermechanismus aus Figur 4 in vergrößerter Darstellung, wobei sich der Steuerhebel in seiner Halt-Stellung befindet,
- Fig. 6: die rechte Seite des Steuermechanismus in perspektivischer Darstellung,
- Fig. 7: einen Teil der linken Seite des Steuermechanismus in vergrößerter und perspektivischer Darstellung,
- Fig. 8: den Teil des Steuermechanismus aus Figur 7, wobei allerdings die Teile in einer Anordnung gezeigt sind, wie sie vorliegt, wenn sich der Steuerhebel in seiner Halt-Stellung befindet, und
- Fig. 9: ein schematisches Diagramm des Antriebssystems des Rasenmähers nach einem bevorzugten Ausführungsbeispiel.

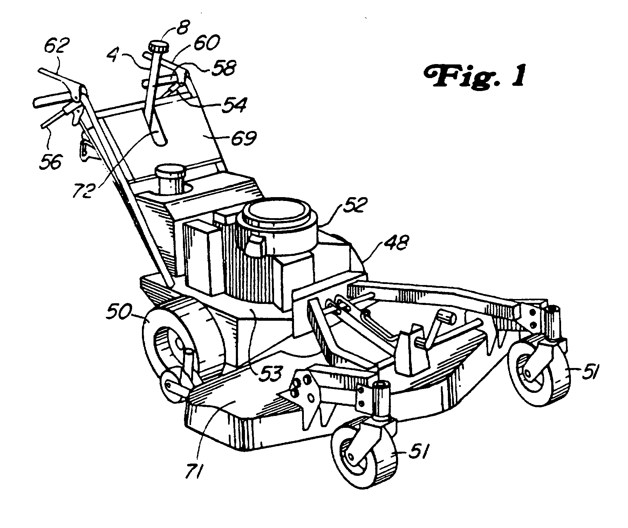

In Figur 1 ist in vereinfachter, perspektivischer Darstellung ein selbstangetriebener geführter Rasenmäher nach einem bevorzugten Ausführungsbeispiel der Erfindung gezeigt. Der Rasenmäher enthält im allgemeinen ein linkes und ein rechtes Fortbewegungsmittel 48 und 50 in der Form eines Rades, ein Paar vorderer Räder 51, einen als Verbrennungsmotor ausgebildeten Motor 52, der auf eine Antriebstragfläche 53 montiert ist, die selbst ein Paar hydrostatischer Getriebe aufnimmt, eine zweite Tragfläche 71, die ein oder mehrere Messer beinhaltet, und ein Instrumentenbrett 69, das sich zwischen nach hinten weisenden Handgriffen 58 erstreckt.

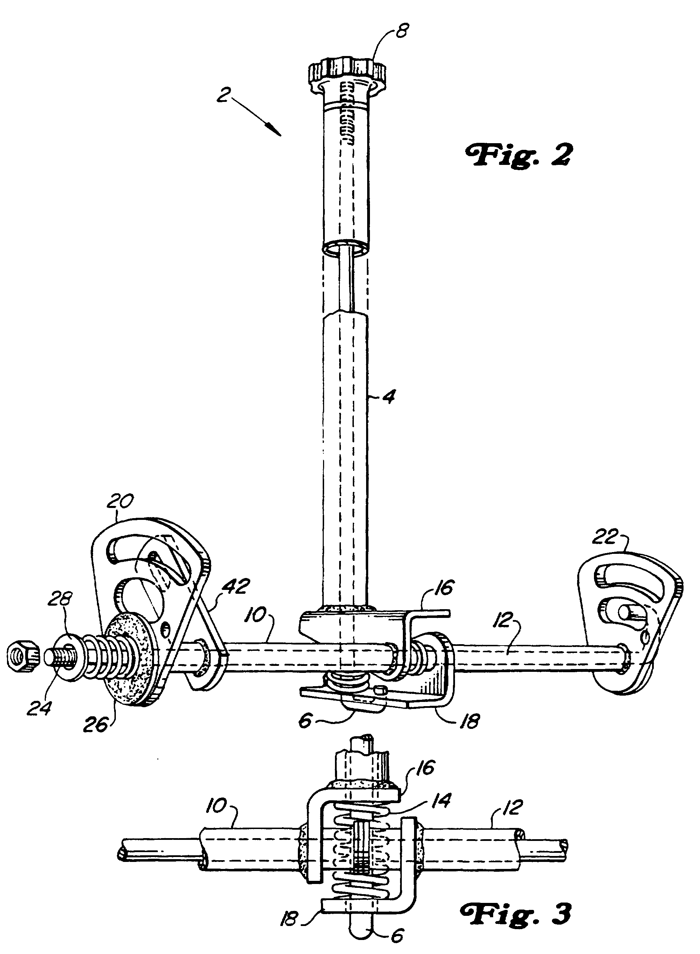

Gemäß Figur 2 besteht ein Steuermechanismus 2 für Motoren (M) für die Fortbewegungsmittel 48, 50 aus einem hauptsächlichen Steuerhebel 4, der als ein hohler Zylinder ausgebildet ist, in den ein mit Gewinde versehenes J-förmiges formschlüssiges Stellmittel 6 in der Form einer Stange eingefügt ist, damit dieses mit seinem Gewindeende in Eingriff mit einem Einstellrad 8 zum Einstellen der Spur gelangen kann. Der hauptsächliche Steuerhebel 4 ist an ein linkes Steuerrohr 10 angeschweißt und über die sich rückwärtig erstreckende Basis des Stellmittels 6 und ein kraftschlüssiges Stellmittel 14 in der Art einer Feder zur Spannung des Steuerrohrs 14 mit einem rechten Steuerrohr 12 funktional verbunden. Das linke und das rechte Steuerrohr 10, 12 haben linke und rechte plattenförmige Einstellmittel 16, 18 für die Steuerrohre 10, 12, die an deren innere Enden angebracht sind, und enden an linken und rechten Führungen 20, 22 an ihren äußeren Enden. Eine Schwenkstange 24 erstreckt sich durch das linke und das rechte Steuerrohr 10, 12 entlang einer Schwenkachse des linken und rechten Steuerrohrs 10, 12. Eine unbeabsichtigte Drehbewegung des linken und des rechten Steuerrohrs 10, 12 wird unterdrückt durch Reibmittel 26, von denen eines zwischen einen Träger 68 des Instrumentenbretts 69 und die linke Führung 20 eingefügt ist, und von denen ein anderes zwischen den Träger 68 und die rechte Führung 22 eingefügt ist. Eine Feder 28 der Schwenkstange 24 hilft, die Reibmittel 26 anzupressen.

Das linke und rechte Einstellmittel 16, 18 hat im allgemeinen eine flache Oberfläche, die von dem Stellmittel 14 voneinander weggedrückt werden. Das Anspannen oder Lösen des Einstellrades 8 bewirkt eine Drehung des rechten Steuerrohrs 12 in bezug auf das linke Steuerrohr 10 und vergrößert oder verringert die Geschwindigkeit des rechten angetriebenen Fortbewegungsmittels 50 in bezug auf das linke angetriebene Fortbewegungsmittel 48. Obwohl das besondere dargestellte Ausführungsbeispiel linke und rechte angetriebene Räder enthält, ist hier festzuhalten, daß die Erfindung nicht nur die Verwendung angetriebener Räder, sondern auch andere den Boden beaufschlagende Fortbewegungsmittel umfaßt, wie z. B. Gleisketten.

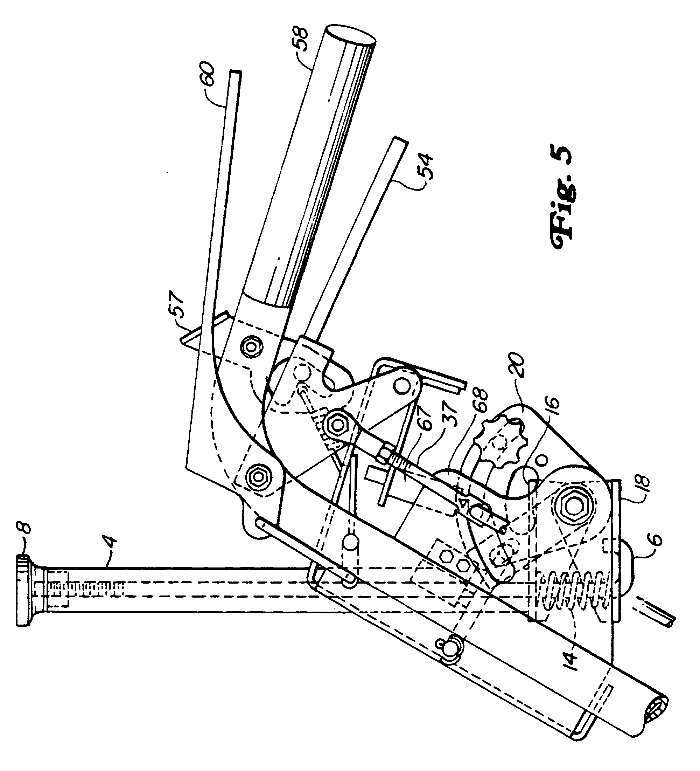

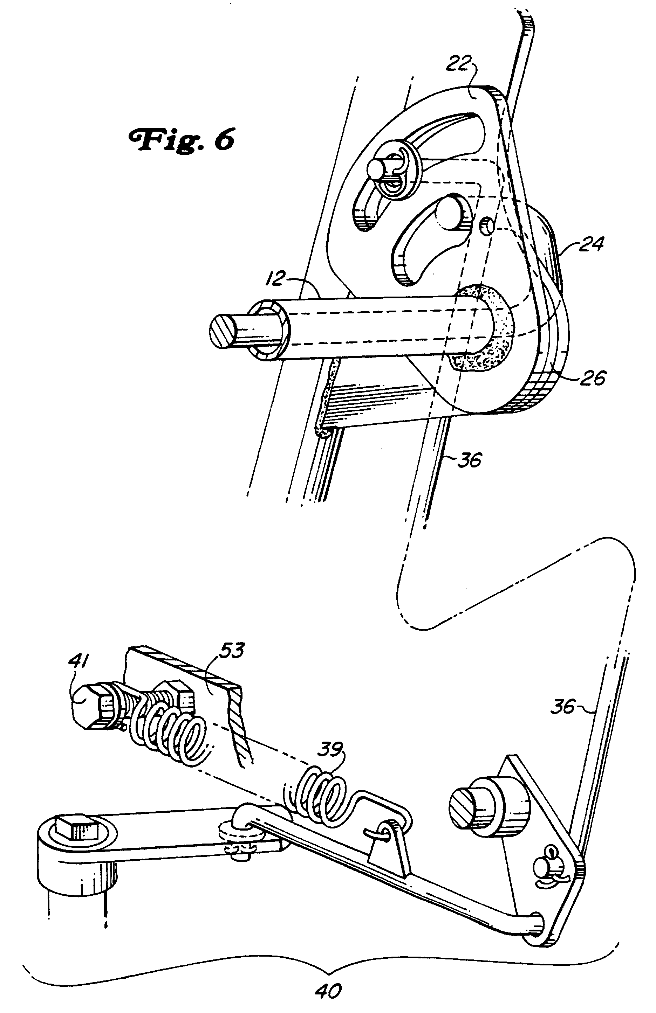

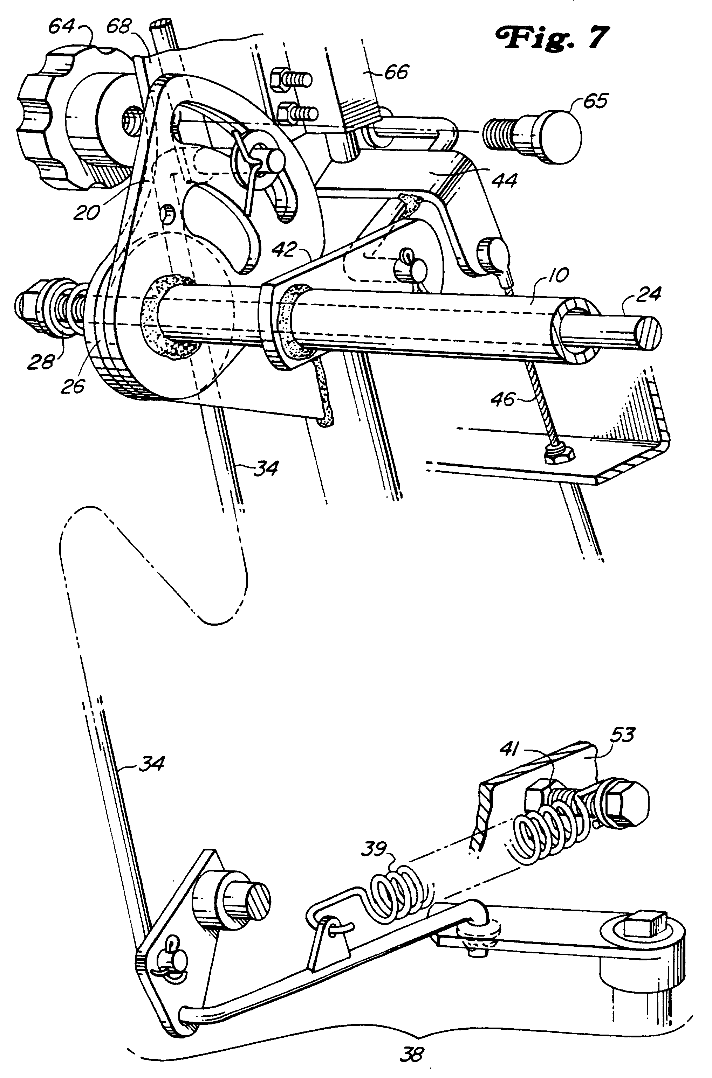

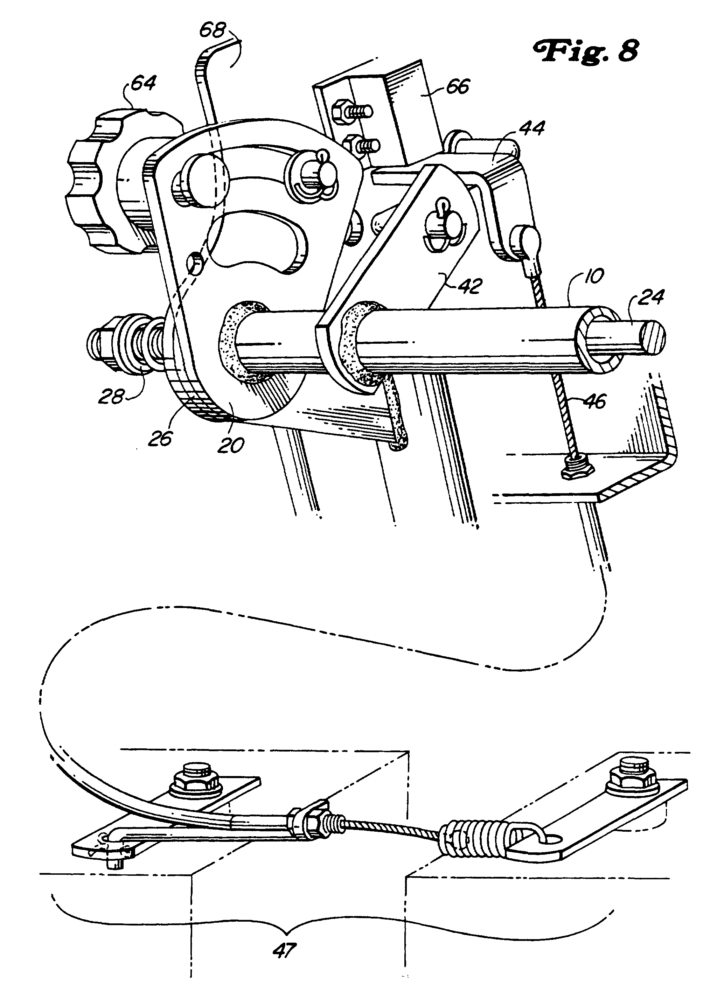

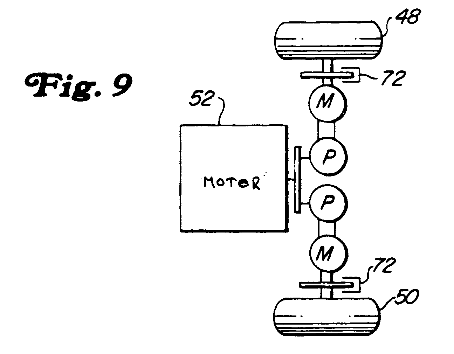

Wenn der hauptsächliche Steuerhebel 4 von der Bedienungsperson gehandhabt wird, verändert das linke und das rechte Steuerrohr 10, 12 den Bewegungsbereich dazugehöriger linker und rechter Gestänge 34, 36, die der Steuerung bzw. Lenkung dienen. Das linke und rechte Gestänge 34, 36 wird dazu benutzt, linke und rechte Schwenkplatteneinstellvorrichtungen 38, 40 - sh. Fig. 6 und 7 - zu beeinflussen, um die Verdrängung dazugehöriger als Hydraulikpumpen ausgebildeter Pumpen (P) innerhalb des Getriebes zu ändern. Die Verdrängung der Pumpen (P) steht in direktem Bezug zu der Ausgabe der dazugehörigen als Hydraulikmotoren ausgebildeten Motoren (M), die die Geschwindigkeit des linken und rechten Fortbewegungsmittels 48, 50 verstellen, und zwar zwischen einer Höchstgeschwindigkeit, wenn der Steuerhebel 4 nach vorne in seine Höchstgeschwindigkeitsstellung gedrückt wird, und einer nahezu Neutralstellung, wenn der Steuerhebel 4 in seine Halt-Stellung gezogen wird, wie sie in Figur 5 gezeigt ist. Gemäß Figur 8 hebt ein Bremsarm 42, der an das linke Steuerrohr 10 angeschweißt ist, eine Bremsbetätigungsvorrichtung 44 an, der an den Träger 68 schwenkbar angebracht ist, so daß die Bremsbetätigungsvorrichtung 44 um eine im wesentlichen horizontale Achse schwenkt, wenn der Steuerhebel 4 in seine Halt-Stellung bewegt wird. Die Bremsbetätigungsvorrichtung 44 zieht ein Seil 46, um einen Bremseinrückzusammenbau 47 zu betätigen. In dem gezeigten bevorzugten Ausführungsbeispiel sind die von dem Bremseinrückzusammenbau 47 ausgelösten Bremsen ein Paar nasser Bremsen 73 bekannter Konstruktion innerhalb des hydrostatischen Getriebes, wie es in Figur 9 schematisch dargestellt ist, die dazu benutzt werden, die Drehung des linken und des rechten Fortbewegungsmittels 48, 50 zu beenden. Obwohl die in dem bevorzugten Ausführungsbeispiel der vorliegenden Erfindung benutzten Bremsen 73 innere nasse Bremsen sind, wird die Benutzung anderer Arten in dem Stand der Technik bekannter Bremsen (z. B. außenliegende Bremse, Backenbremse, Scheibenbremse, Klotzbremse, Bandbremse und Konusbremse) von der Erfindung umfaßt.

Während des normalen Mähbetriebs wird Kraft von dem Motor 52 mittels eines Paars hydrostatischer Getriebe, das unter der Antriebstragfläche 53 montiert ist, dem linken und dem rechten angetriebenen Fortbewegungsmittel 48 und 50 zugeführt. Wie es in Figur 9 in schematischer Art dargestellt ist, enthält jedes hydrostatische Getriebe ein System hydraulischer Komponenten, die eine Pumpe (P) und einen Motor (M) enthalten. Der Motor 52 treibt das Paar von Pumpen (P) an, von denen jede mit einem Motor (M) verbunden ist, um das dazugehörige Fortbewegungsmittel 48, 50 anzutreiben. Die Pumpe (P) und der Motor (M) sind als Hydraulikpumpe und als Hydraulikmotor ausgebildet. Die Bremsen 73 sind an jedes linke und rechte Fortbewegungsmittel 48, 50 angeschlossen. Der Motor 52 treibt auch eine nicht gezeigte Kraftübertragungswelle an, an die ein oder mehrere Messer zum Mähen von Gut angeschlossen sind.

Auf den Handgriffen 58 sind linke und rechte der Lenkung dienende Hebel 54, 56 vorgesehen. Der linke und rechte Hebel 54, 56 werden aufgrund von Federn 39, die die Schwenkplatten beaufschlagen, in ihre in Figur 1 gezeigte untere Stellung gedrängt, wobei die Federn 39 einenends an die linke oder rechte Schwenkplatteneinstellvorrichtung 38, 40 und anderenends an Federhalter 41 angeschlossen sind, die an die Antriebstragfläche 53 montiert sind, wie dies in den Figuren 6 und 7 gezeigt ist. Der linke und der rechte Hebel 54, 56 wirken auf eine Verbindung herstellende Gestänge 37, die die entsprechenden linken und rechten Gestänge 34, 36 entlang eines Pfades bewegen, der von den linken und rechten Führungen 20, 22 vorgegeben wird, um die Pumpen (P) in einer unbegrenzten Anzahl von Schritten in einem Bereich zwischen der maximalen Vorwärtsfahrtgeschwindigkeit, wie sie von dem Steuerhebel 4 eingestellt wird, durch Neutral in Rückwärts zu steuern. Wenn sich der linke und der rechte Hebel 54, 56 in seiner unteren vorgespannten Stellung befindet, werden das linke und das rechte Fortbewegungsmittel 48, 50 im wesentlichen im Uhrzeigerdrehsinn angetrieben, wenn man auf Figur 1 schaut, und zwar in einem Maß, das der maximalen Vorwärtsfahrtgeschwindigkeit entspricht, die von dem Steuerhebel 4 eingestellt ist.

Wenn der linke und der rechte Hebel 54, 56 von einer Bedienungsperson nach oben zur Neutralstellung - sh. Figur 5 - gedrängt wird, werden das linke und das rechte Fortbewegungsmittel 48, 50 verlangsamt. Eine manuell einlegbare Neutrallasche 57 ist als Steuerung vorhanden, um es der Bedienungsperson zu ermöglichen, das Paar Pumpen (P) nahe der Neutralstellung zu arretieren, und zwar selbst dann, wenn sich der Steuerhebel 4 in einer anderen als seiner Halt-Stellung befindet. Eine nach oben gerichtete Bewegung des linken und rechten Hebels 54, 56 über die Neutralstellung hinaus schaltet die entsprechende Pumpen (P) aus dem Paar in Rückwärts, was bewirkt, daß ein entsprechendes linkes oder rechtes Fortbewegungsmittel 48, 50 entgegen der Vorwärtsdrehrichtung dreht.

Eine einzelne Bewegung des linken oder des rechten Hebels 54, 56 mit Bezug auf den jeweils anderen steht für eine Linksoder Rechtsdrehung des Fahrzeugs. Im Gegensatz dazu bewirkt eine Bewegung des Steuerhebels 4 oder beider Hebel 54, 56 im gleichen Maß eine gleiche Bewegung der beiden linken und rechten Gestänge 34, 36 zusammen und steht für eine Beschleunigung oder Verzögerung geradeaus. Jedoch ist der Steuerhebel 4 derart ausgebildet, daß die Bedienungsperson nicht in der Lage ist, durch den Gebrauch des Steuerhebels 4 das Paar Pumpen (P) in Rückwärts zu schalten; vielmehr ist die Handhabung des linken und rechten Hebels 54, 56 erforderlich, um den Rasenmäher rückwärts zu bewegen. In dem bevorzugten Ausführungsbeispiel wird die Bewegung des Steuerhebels 4 in seiner Halt-Stellung mittels der Oberseite der Neutrallasche 57 in dem Instrumentenbrett 69 begrenzt. Obwohl es geschehen könnte, daß der Steuerhebel 4 zu weit bewegt wird, wird die Höchstgeschwindigkeitsstellung des Steuerhebels 4 erreicht, wenn eine Schwenkplatte in einem der Getriebe, an die der Steuerhebel 4 angeschlossen ist, seinen maximalen Winkel erreicht. Die Höchstgeschwindigkeitsstellung des Steuerhebels 4 kann, falls dies gewünscht ist, durch einen Anschlag geregelt werden.

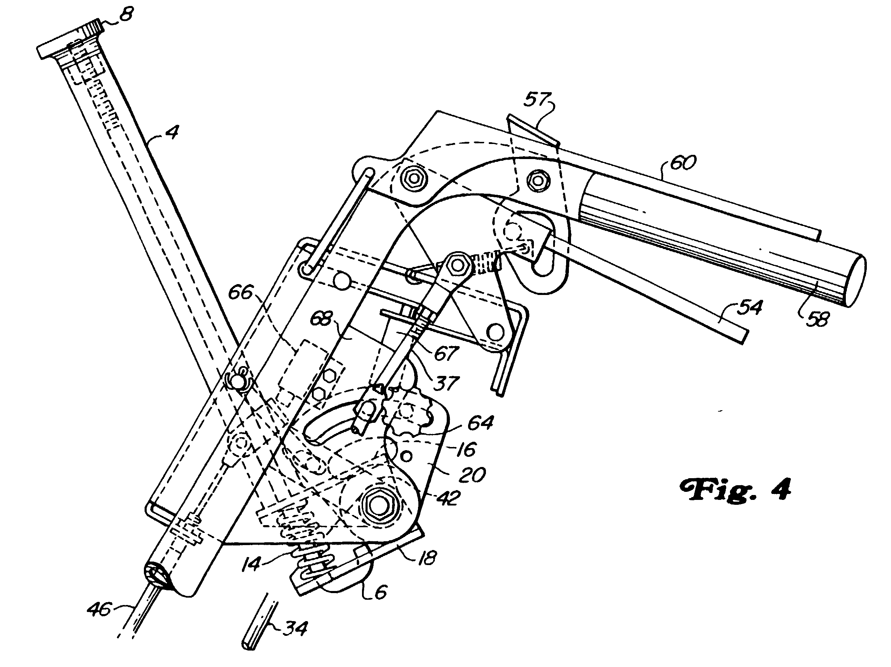

Andere Merkmale, die in dem bevorzugten Ausführungsbeispiel enthalten sind, schließen linke und rechte Schalthebel 60, 62 ein, die auf die Anwesenheit einer Bedienungsperson ansprechen und die auf den Handgriffen 58 gegenüber den linken und rechten Hebeln 54, 56 angeordnet sind, so daß sie während des Betriebs des Rasenmähers von der Bedienungsperson bequem erreicht werden können. Zusätzlich ist ein Sperrkreis vorgesehen, der sich aus einem in den Figuren 7 und 8 gezeigten Bremssperrschalter 66 und einem in den Figuren 4 und 5 gezeigten Schalter 67 zusammensetzt, dessen Betrieb von der Anwesenheit einer Bedienungsperson abhängt, wobei der Bremssperrschalter 66 infolge der Stellung des Steuerhebels 4 in seiner Halt-Stellung und der Bremssperrschalter 67 infolge des Einrückens des linken oder rechten Schalthebels 60, 62 betätigt wird. Der Bremskreis ermöglicht es der Bedienungsperson, den Rasenmäher anzuhalten, indem er den Steuerhebel 4 in seine Halt-Stellung bringt und somit die Getriebe in Neutral schaltet und die Bremsen 73 anlegt, und nach dem Ausrücken des oder der Messer den linken und rechten Schalthebel 60, 62 zu lösen und sich von dem Rasenmäher zu entfernen, während der Motor 52 weiter läuft. Der Bremskreis ermöglicht es somit einer Bedienungsperson, z. B. den Rasenmäher anzuhalten und um ihn herumzulaufen, um ein Hindernis aus dem Weg des Rasenmähers zu räumen, während sichergestellt wird, daß der Motor 52 nicht laufen wird, wenn das oder die Messer eingerückt sind und weder der linke noch der rechte Schalthebel 60, 62 aktiviert ist.

In dem bevorzugten Ausführungsbeispiel ist auch ein einstellbarer Anschlag 64 enthalten, der mittels demontierbarer Befestigungsmittel 65 an der linken oder rechten Führung 20, 22 festgelegt ist, um die Bewegung der einen oder anderen Führung 20, 22 durch Anschlagen an dem Träger 68 zu begrenzen und dadurch auch die Bewegung der linken und rechten Gestänge 34, 36 aufgrund der Betätigung des Steuerhebels 4. Außerdem wird dadurch eine weitere Bewegung der linken oder rechten Führung 20 oder 22 verhindert, wenn die linke oder rechte Führung 20 oder 22, an die der Steuerhebel 4 angeschlossen ist, die gewünschte Einstellung erreicht hat. Der einstellbare Anschlag 64 kann in eine Vielzahl von Stellungen gebracht werden, was es der Bedienungsperson erlaubt, eine bevorzugte Betriebsgeschwindigkeit voreinzustellen, zu der nach dem Anhalten leicht wieder zurückgekehrt werden kann, oder den Steuerhebel 4 in seiner Halt-Stellung festzulegen, um Vorkehrungen gegen ein ungewolltes Lösen der Bremsen 73 zu treffen. Die Einstellung des Anschlags 64, um den Steuerhebel 4 in seiner Halt-Stellung zu arretieren, ist insbesondere brauchbar, um ein Ausrücken der Bremsen 73 während des Transports zu vermeiden, wenn der Rasenmäher beim Transport auf einem Anhänger oder einem anderen Beförderungsmittel erschüttert wird.

## Patentansprüche

1. Fahrzeug in selbstangetriebener Bauweise, insbesondere Rasenmäher, mit einem linken und einem rechten Fortbewegungsmittel (48, 50), die mittelbar oder unmittelbar von jeweils einem Motor (M) angetrieben werden, mit linken und rechten Geschwindigkeitssteuerungen (34, 37, 38, 39, 54; 36 - 39, 56), zur Steuerung der Motoren (M) und mit einem Steuerhebel (4), der in Verbindung mit den Geschwindigkeitssteuerungen (34, 37, 38, 39, 54; 36 - 39, 56) steht, eine Vielzahl von Stellungen einnehmen kann, in denen die Geschwindigkeit jedes Motors (M) begrenzt wird, und in einen das Verhältnis der Geschwindigkeiten bestimmenden Zustand bringbar ist, **dadurch gekennzeichnet, daß** der Steuerhebel (4) mit Führungen (20, 22) für die Geschwindigkeitssteuerungen jedes Motors (M) versehen ist, die relativ zueinander verstellbar sind und einen Anschlag für die jeweilige Geschwindigkeitssteuerung (34, 37, 38, 39, 54; 36 - 39, 56) bieten.

2. Fahrzeug nach Anspruch 1, **dadurch gekennzeichnet, daß** die Führung (20, 22) jeder Seite in drehfester Verbindung mit einem Steuerrohr (10, 12) steht, die an einander zugelegenen Endbereichen insbesondere über Einstellmittel (16, 18), miteinander in Verbindung stehen und über formund/oder kraftschlüssige Stellmittel (6, 14) gegeneinander verstellbar sind.

3. Fahrzeug nach Anspruch 1 oder 2, **dadurch gekennzeichnet, daß** die Geschwindigkeitssteuerungen (34, 37, 38, 39, 54; 36 - 39, 56) für jede Seite einen Hebel (54, 56) und ein Gestänge (34, 37; 36, 37) enthält.

4. Fahrzeug nach einem oder mehreren der vorherigen Ansprüche, **dadurch gekennzeichnet, daß** die Führungen (20, 22) mit umrandeten Ausnehmungen versehen sind, in denen die Gestänge (34, 37; 36, 37) geführt und zur Anlage bringbar ist.

5. Fahrzeug nach einem oder mehreren der vorherigen Ansprüche, **dadurch gekennzeichnet, daß** die formschlüssigen Stellmittel (6, 8) in der Art einer Gewindestange mit einem Einstellrad (8) ausgebildet sind.

6. Fahrzeug nach einem oder mehreren der vorherigen Ansprüche, **dadurch gekennzeichnet, daß** die Führungen (20, 22) mit einem Anschlag (64) für die maximale Bewegung des Steuerhebels (4) versehen sind.

7. Fahrzeug nach einem oder mehreren der vorherigen Ansprüche, **dadurch gekennzeichnet, daß** der Motor (M) ein Hydraulikmotor mit konstantem Durchlaßvolumen ist und von einer Pumpe (P) mit einer variablen Förderleistung und/oder Förderrichtung beaufschlagt wird.

8. Fahrzeug nach einem oder mehreren der vorherigen Ansprüche, **dadurch gekennzeichnet, daß** wenigstens ein Schalthebel (60, 62) und ein Schalter (67) vorgesehen sind, die im Falle, daß sie nicht von einer Bedienungsperson betätigt werden, auf einen Motor (52) zum Antrieb des Fahrzeugs wirken.

9. Fahrzeug nach einem oder mehreren der vorherigen Ansprüche, **dadurch gekennzeichnet, daß** den Fortbewegungsmitteln (48, 50) Bremsen (73) zugeordnet sind, die von dem Steuerhebel (4) betätigt werden, wenn dieser eine Stellung einnimmt, in der kein Antrieb der Fortbewegungsmittel (48, 50) erfolgen soll.

10. Fahrzeug nach einem oder mehreren der vorherigen Ansprüche, **dadurch gekennzeichnet, daß** der Steuerhebel 4, das Steuerrohr (10), das Einstellmittel (16) und die Führung (20) für das Fortbewegungsmittel (50) einer Seite starr miteinander verbunden und vorzugsweise einstückig ausgebildet sind.

11. Fahrzeug nach einem oder mehreren der vorherigen Ansprüche, **dadurch gekennzeichnet, daß** die Einstellmittel (16, 18) mittels eines als Feder ausgebildeten kraftschlüssigen Stellmittels (14) auseinander bewegt werden.

12. Fahrzeug nach einem oder mehreren der vorherigen Ansprüche, **dadurch gekennzeichnet, daß** das formschlüssige Stellmittel (6) in der Art einer in dem Steuerhebel (4) geführten Stange mit einem Gewindeende ausgebildet ist, auf das das Einstellrad (8) aufschraubbar ist, während dessen gegenüberliegender Endbereich drehfest in dem beweglichen Einstellmittel (18) gehalten ist.

13. Fahrzeug nach einem oder mehreren der vorherigen Ansprüche, **dadurch gekennzeichnet, daß** der Steuerhebel (4) mittelbar oder unmittelbar über Reibmittel (26) an einem Träger (68) gelagert ist.

## Claims

1. A self-propelled vehicle, especially a lawnmower, with left and right propulsion means (48, 50), which are each driven indirectly or directly by a motor (M), with left and right speed controls (34, 37, 38, 39, 54; 36 - 39, 56) for controlling the motors (M) and with a control lever (4) which is coupled to the speed controls (34, 37, 38, 39, 54; 36 - 39, 56), can assume a plurality of positions, in which the speed of each motor (M) is limited, and can be brought into a state determining the ratio of the speeds, **characterized in that** the control lever (4) is provided with guides (20, 22) for the speed controls of each motor (M), which guides are adjustable relative to one another and provide a stop for the respective speed control (34, 37, 38, 39, 54; 36 - 39, 56).

2. A vehicle according to claim 1, **characterized in that** the guide (20, 22) on each side is rotationally fast with a control tube (10, 12) which are coupled together at end regions facing one another, in particular by adjusting means (16, 18) and are adjustable relative to one another by positively and/or frictionally engaging setting means (6, 14).

3. A vehicle according to claim 1 or 2, **characterized in that** the speed controls (34, 37, 38, 39, 54; 36 - 39, 56) for each side include a lever (54, 56) and a linkage (34, 37); 36, 37).

4. A vehicle according to one or more of the preceding claims, **characterized in that** the guides (20, 22) are provided with edged recesses in which the linkages (34, 37; 36, 37) are guided and can be brought into abutment.

5. A vehicle according to one or more of the preceding claims, **characterized in that** the positively engaging setting means (6, 8) are in the nature of a threaded rod with an adjusting wheel (8).

6. A vehicle according to one or more of the preceding claims, **characterized in that** the guides (20, 22) are provided with a stop (64) for the maximum movement of the control lever (4).

7. A vehicle according to one or more of the preceding claims, **characterized in that** the motor (M) is a hydraulic motor with constant displacement and is acted upon by a pump (P) with variable displacement and/or feed direction.

8. A vehicle according to one or more of the preceding claims, **characterized in that** at least one switch lever (60, 62) and a switch (67) are provided and act on the engine (52) for driving the vehicle in the case in which they are not actuated by an operator.

9. A vehicle according to one or more of the preceding claims, **characterized in that** brakes (73) are associated with the propulsion means (48, 50) and are actuated by the control lever (4) when this assumes a position in which no drive of the propulsion means (48, 50) is to take place.

10. A vehicle according to one or more of the preceding claims, **characterized in that** the control lever (4), the control tube (10), the adjusting means (16) and the guide (20) for the propulsion means (50) of one side are rigidly connected together and preferably formed in one piece.

11. A vehicle according to one or more of the preceding claims, **characterized in that** the adjusting means (16, 18) are moved apart by means of a frictionally engaging positioning means (14) formed as a spring.

12. A vehicle according to one or more of the preceding claims, **characterized in that** the positively engaging setting means (6) is in the form of a rod guided in the control lever (4), with a threaded end on which the adjusting wheel (8) can be screwed, while its opposite end region is held rotationally fast in the movable adjusting means (18).

13. A vehicle according to one or more of the preceding claims, **characterized in that** the control lever (4) is indirectly or directly mounted on a support (68) via friction means (26).

## Revendications

1. Véhicule de type automoteur, en particulier une tondeuse, avec des moyens de locomotion gauches et droits (48, 50), qui sont respectivement entraînés directement ou indirectement par un moteur (M), avec des commandes de vitesse gauche et droite (34, 37, 38, 39, 54 ; 36 à 39, 56) pour commander les moteurs (M) et avec un levier de commande (4) qui est en communication avec les commandes de vitesse (34, 37, 38, 39, 54 ; 36 à 39, 56), peut adopter une pluralité de positions, dans lesquelles la vitesse de chaque moteur (M) est limitée et peut être amené dans un état déterminant le rapport des vitesses, **caractérisé en ce que** le levier de commande (4) est muni de guides (20, 22) pour les commandes de vitesse de chaque moteur (M) qui peuvent être modifiés les uns par rapport aux autres et présentent une butée pour la commande de vitesse respective (34, 37, 38, 39, 54 ; 36 à 39, 56).

2. Véhicule selon la revendication 1, **caractérisé en ce que** les guides (20, 22) de chaque côté se trouvent en communication verrouillée en rotation avec un tuyau de commande (10, 12), les guides étant en communication l'un avec l'autre dans des zones d'extrémité tournées l'une vers l'autre, en particulier par l'intermédiaire de moyens d'ajustement (16, 18), et pouvant être réglés par des moyens de réglage à engagement positif et/ou par adhérence (6, 14).

3. Véhicule selon la revendication 1 ou 2, **caractérisé en ce que** les commandes de vitesse (34, 37, 38, 39, 54 ; 36 à 39, 56) comportent pour chaque côté un levier (54, 56) et une tringlerie (34, 37 ; 36, 37).

4. Véhicule selon l'une quelconque ou plusieurs des revendications précédentes, **caractérisé en ce que** les guides (20, 22) sont munis d'évidements entourés dans lesquels les tringleries (34, 37 ; 36, 37) peuvent être guidées et amenées en butée.

5. Véhicule selon l'une quelconque ou plusieurs des revendications précédentes, **caractérisé en ce que** les moyens de réglage à engagement positif (6, 8) sont réalisés sous forme d'une tige filetée avec une molette de réglage (8).

6. Véhicule selon l'une quelconque ou plusieurs des revendications précédentes, **caractérisé en ce que** les guides (20, 22) sont munis d'une butée (64) pour le déplacement maximal du levier de commande (4).

7. Véhicule selon l'une quelconque ou plusieurs des revendications précédentes, **caractérisé en ce que** le moteur (M) est un moteur hydraulique à volume de passage constant et mis en charge par une pompe (P) avec un débit et/ou une direction de refoulement variable.

8. Véhicule selon l'une quelconque ou plusieurs des revendications précédentes, **caractérisé en ce qu'**au moins un levier de commande (60, 62) et un commutateur (67) sont prévus qui, au cas où ils ne seraient pas actionnés par un opérateur, agissent sur un moteur (52) pour entraîner le véhicule.

9. Véhicule selon l'une quelconque ou plusieurs des revendications précédentes, **caractérisé en ce qu'**aux moyens de locomotion (48, 50), des freins (73) sont attribués qui sont actionnés par le levier de commande (4) quand celui-ci adopte une position dans laquelle aucun entraînement des moyens de locomotion (48, 50) ne doit avoir lieu.

10. Véhicule selon l'une quelconque ou plusieurs des revendications précédentes, **caractérisé en ce que** le levier de commande (4), le tuyau de commande (10), les moyens d'ajustement (16) et le guide (20) pour les moyens de locomotion (50) d'un côté sont reliés ensemble de façon rigide et réalisés de préférence de façon intégrale.

11. Véhicule selon l'une quelconque ou plusieurs des revendications précédentes, **caractérisé en ce que** les moyens d'ajustement (16, 18) sont écartés par des moyens de réglage par adhérence (14) réalisés sous forme de ressort.

12. Véhicule selon l'une quelconque ou plusieurs des revendications précédentes, **caractérisé en ce que** les moyens de réglage à engagement positif (6) sont réalisés sous la forme d'une barre guidée dans le levier de commande (4) avec une extrémité filetée sur laquelle on peut visser la molette de réglage (8) tandis que sa zone d'extrémité opposée est maintenue dans les moyens d'ajustement mobiles (18) de façon verrouillée en rotation.

13. Véhicule selon l'une quelconque ou plusieurs des revendications précédentes, **caractérisé en ce que** le levier de commande (4) est logé directement ou indirectement par l'intermédiaire de moyens de friction (26) sur un support (68).
